# EUROPEAN PATENT APPLICATION

(11) **EP 2 372 219 A1**
(43) Date of publication of application: **05.10.2011**
(21) Application number: 10197241.2
(22) Date of filing: 29.12.2010
(51) Int. Cl.: F16M 11/08

(54) **Television, stand and electronic apparatus**

(30) Priority: 29.03.2010 JP 2010076048
(71) Applicant: Kabushiki Kaisha Toshiba, Tokyo 105-8001 (JP)
(72) Inventor: Takao, Mitsuyoshi, Tokyo 105-8001 (JP)
(74) Representative: Henkel, Breuer & Partner

(57) **Abstract**

According to one embodiment, a television (1) includes a base (25), a column (26), a second stopper (41), a supporting portion (42) and a cover (29). The base (25) is provided with an opening (37), and a first stopper (38) is provided on the inner edge (37a) of the opening (37). The column (26) is fitted into the opening (37) and rotates in the circumferential direction of the opening (37) relative to the base (25). The second stopper (41) is provided on the column (26), and is brought into contact with the first stopper (38) when the column (26) rotates relative to the base (25). The supporting portion (42) is provided to the column (26) and is supported by the base (25). The cover (29) is fixed to the column (26), and the base (25) is sandwiched between the cover (29) and the supporting portion (42). The cover (29) also covers the first and second stoppers (38, 41).

## Description

Embodiments described herein relate generally to a television which has a rotatable display. Further, the embodiments described herein relate generally to a stand which rotates the display. The embodiments described herein also relate generally to an electronic apparatus having two members which rotate relative to one another.

A flat television such as a liquid crystal television comprises a display, which displays images, and a stand. The display can be detached from the stand and hung on a wall, while the display is used with the stand when the television is placed on a TV cabinet, for example. The stand supports the display, for example, on the mounting surface of the TV cabinet.

The stand has a swivel structure to rotate the display device relative to the stand. For example, the monitor disclosed in Jpn. Pat. Appln. KOKAI Publication No. 2003-298979 comprises a base portion, a connecting portion and a rotating plate.

The connecting portion connects a monitor main body and the base portion. The base portion supports the monitor main body by the connecting portion. Once the connecting portion rotates relative to the base portion, the monitor main body supported by the connecting portion rotates relative to the base portion. The rotating plate is attached to the connecting portion and rotates with the connecting portion inside the base portion.

The above-mentioned swivel structure includes a stop structure to prevent rotation of the display beyond a predetermined angle. For example, the monitor has a receiving portion around the periphery of the rotating plate, and the base portion has an engaging portion inside thereof. The receiving portion and the engaging portion are examples of the stop structure. When the connecting portion rotates to the predetermined angle, the engaging portion obstructs the receiving portion, and the angle of rotation of the connecting portion is limited.

If such a stop structure is externally exposed, an object may be caught in the stop structure. In the monitor, the base portion includes an upper plate and a lower plate. The rotating plate is arranged between the upper plate and the lower plate. In this structure, the rotating plate having the receiving portion is not externally exposed. However, this structure needs the lower plate to cover the rotating plate, and increases the number of components.

A general architecture that implements the various feature of the embodiments will now be described with reference to the drawings. The drawings and the associated descriptions are provided to illustrate the embodiments and not to limit the scope of the invention.
FIG. 1 is an exemplary perspective view of a liquid crystal television according to an embodiment.
FIG. 2 is an exemplary perspective view of the liquid crystal television when viewed from the rear.
FIG. 3 is an exemplary side view of the liquid crystal television.
FIG. 4 is an exemplary perspective view of the stand of the liquid crystal television when viewed from below.
FIG. 5 is an exemplary perspective view of the dismantled stand.
FIG. 6 is an exemplary cross sectional view of the stand.
FIG. 7 is an exemplary perspective view of the dismantled supporting member of the stand.
FIG. 8 is an exemplary schematic plan view of the column and the base of the supporting member.
FIG. 9 is an exemplary perspective view of a part of the stand except the cover when viewed from below.

Various embodiments will be described hereinafter with reference to the accompanying drawings.

In general, according to one embodiment, a television includes a base, a column, a second stopper, a supporting portion and a cover. The base is provided with an opening, and a first stopper is provided on the inner edge of the opening. The column is fitted into the opening and rotates in the circumferential direction of the opening relative to the base. The second stopper is provided on the column, and is brought into contact with the first stopper when the column rotates relative to the base. The supporting portion is provided to the column and is supported by the base. The cover is fixed to the column, and the base is sandwiched between the cover and the supporting portion. The cover also covers the first and second stoppers.

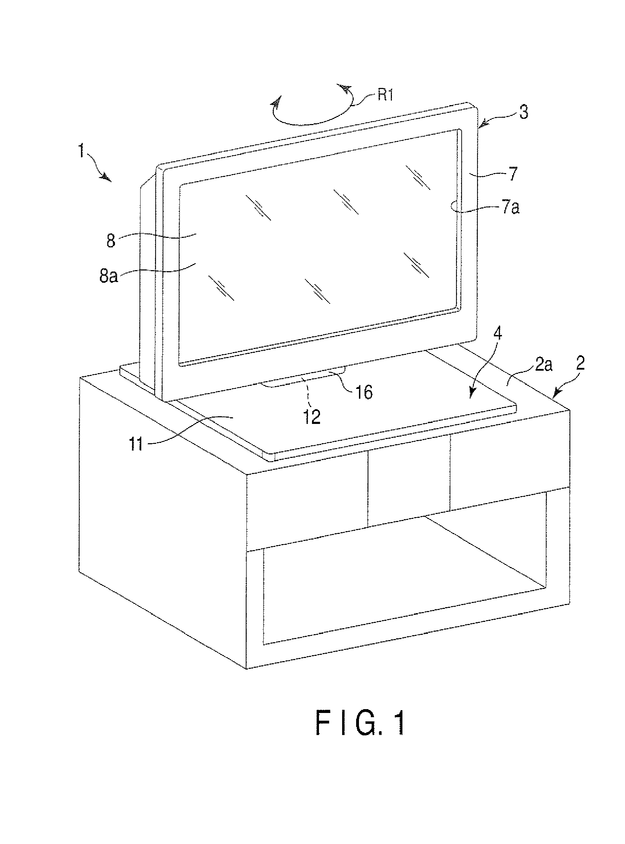

A description will now be given of an embodiment, with reference to FIGS. 1 to 9. In this specification, the near side to the user (that is, user side) is defined as the front, the far side from the user is the rear, the left-hand side of the user is the left, the right-hand side of the user is the right, the upper side from the user's position is up and the lower side from the user's position is down.

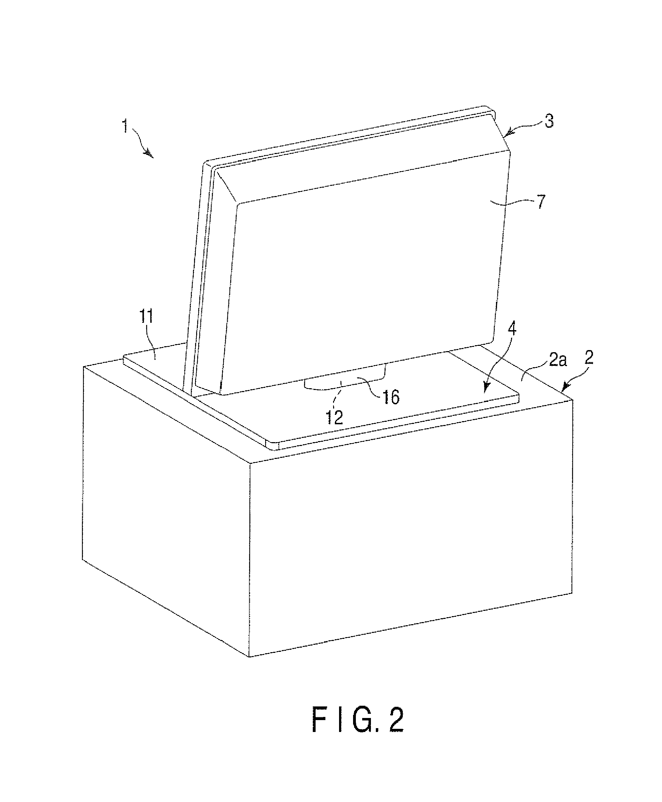

FIG. 1 is a perspective view of a liquid crystal television 1 according to an embodiment. FIG. 2 is a perspective view of the liquid crystal television 1 when viewed from the rear. The liquid crystal television 1 is an example of a television and an electronic apparatus. As shown in FIG. 1, the liquid crystal television 1 is placed on the mounting surface 2a of the TV cabinet 2, for example. The liquid crystal television 1 comprises a display 3 and a stand 4.

The display 3 comprises a housing 7 shaped like a flat box and a liquid crystal display panel 8. The liquid crystal display panel 8 is housed in the housing 7. The liquid crystal display panel 8 comprises a display screen 8a which displays images. The display screen 8a is exposed from the housing 7 by a display opening 7a formed in the housing 7. The display 3 comprises a TV tuner and a speaker, and a plurality of cables are connected to the display 3. The display 3 is rotatable relative to the stand 4 in the directions indicated by arrow R1, as shown in FIG. 1.

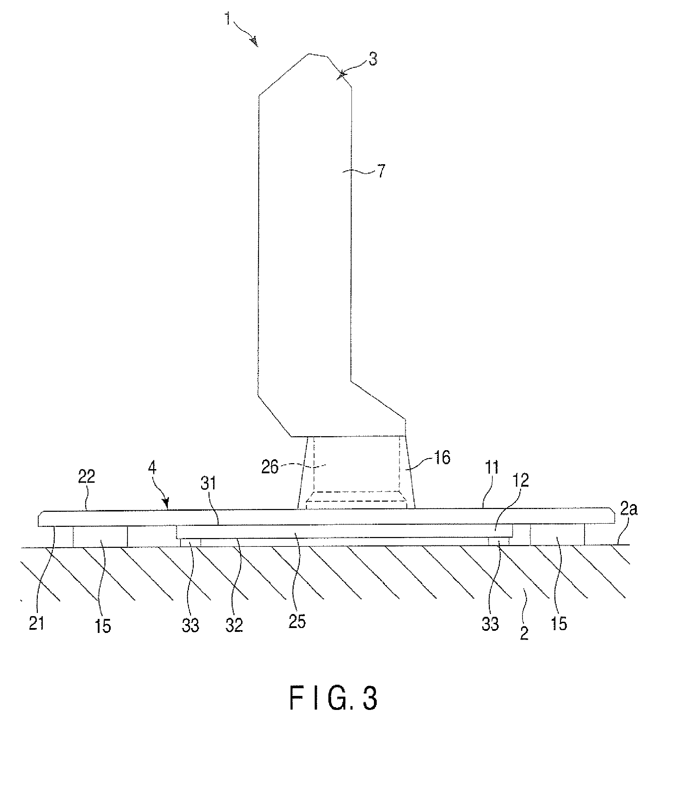

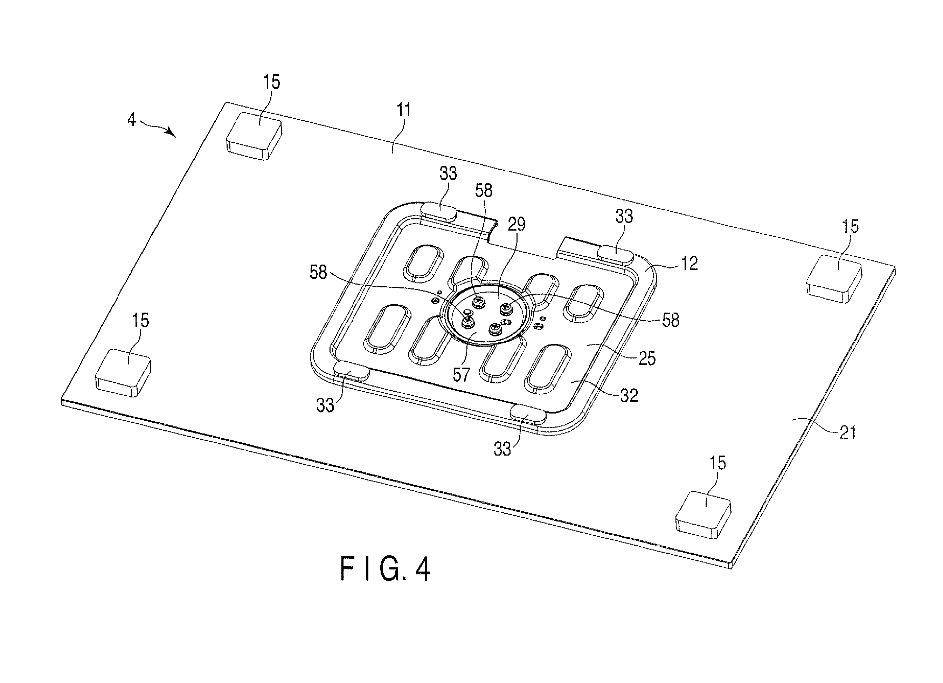

FIG. 3 is a side view of the liquid crystal television 1. FIG. 4 is a perspective view of the stand 4 when viewed from below. The stand 4 comprises a cover member 11, a supporting member 12, four first rubber legs 15 and a column cover 16. The supporting member 12, the first rubber legs 15 and the column cover 16 are attached to the cover member 11.

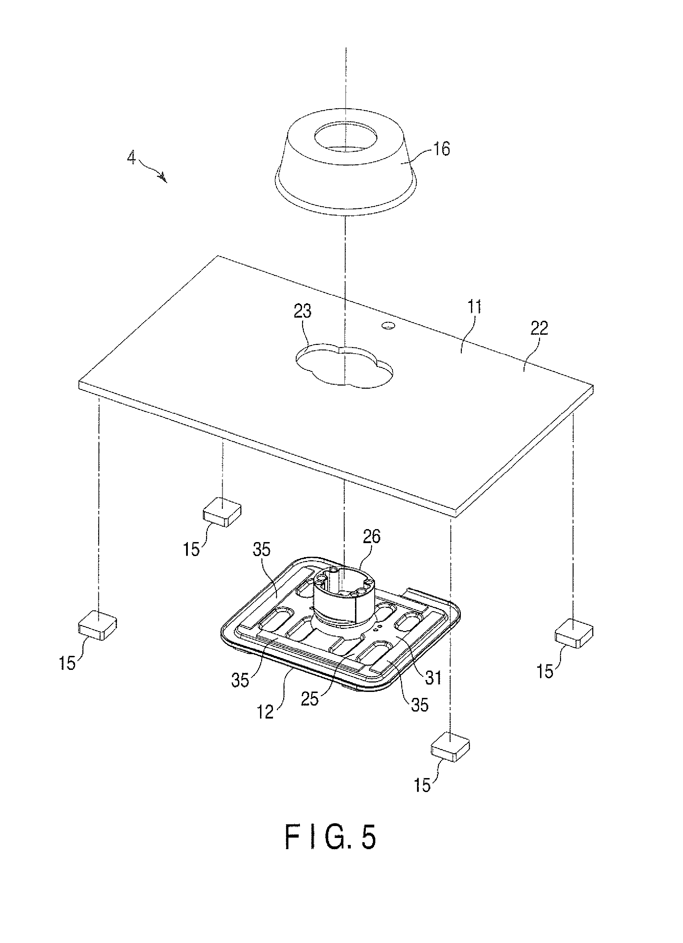

FIG. 5 is a perspective view of dismantled stand 4. As shown in FIG. 5, the cover member 11 is a rectangular glass plate, for example. The cover member 11 has a lower surface 21 and an upper surface 22. The cover member 11 is provided with an insertion hole 23.

As shown in FIG. 3, the lower surface 21 of the cover member 11 faces the mounting surface 2a of the TV cabinet 2. The upper surface 22 is opposed to the lower surface 21. The upper surface 22 faces the display 3. The cover member 11 is vertically shielded from light, for example, by painting the upper surface thereof.

The insertion hole 23 is formed on the upper surface 22 through the lower surface 21. The first rubber legs 15 are fixed to the lower surface 21, for example, by using a double-sided tape. The first rubber legs 15 are arranged at four corners 11a of the cover member 11. The first rubber legs 15 are in contact with the mounting surface 2a to support the cover member 11.

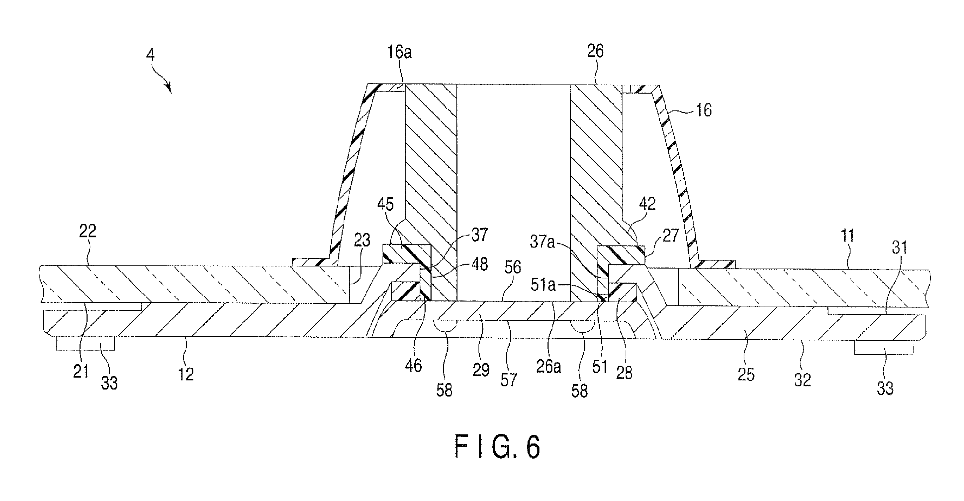

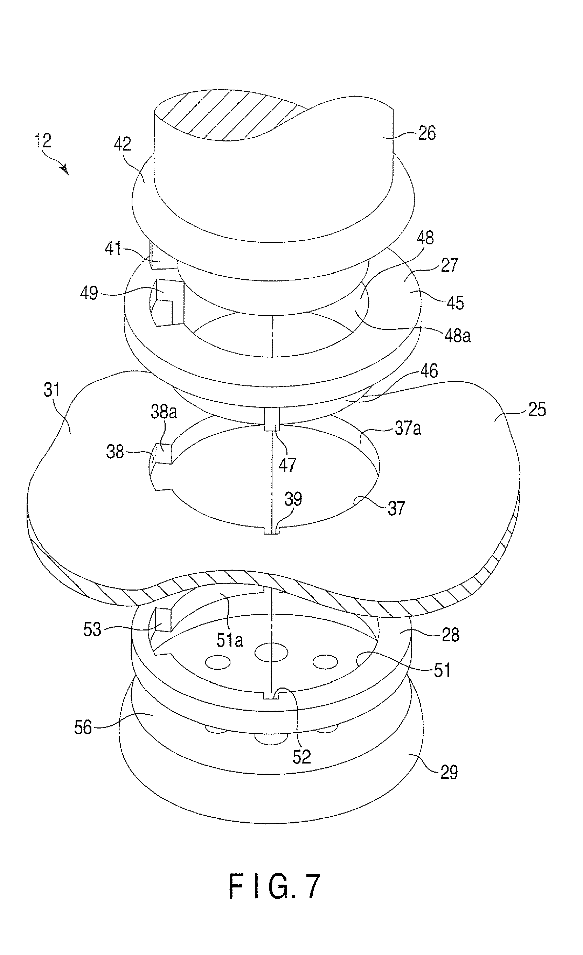

FIG. 6 is a cross sectional view of the stand 4. FIG. 7 is a perspective view of dismantled supporting member 12. As shown in FIG. 6, the supporting member 12 comprises a base 25, a column 26, a first lubricative member 27, a second lubricative member 28, and a cover 29. The base 25 is an example of a base and a first member. The column 26 is an example of a column and a second member.

The base 25 has a first surface 31, a second surface 32 and four second rubber legs 33. The first surface 31 is an upper surface, and the second surface 32 is a bottom surface. The first surface 31 faces the cover member 11. As shown in FIG. 3, the second surface 32 is opposed to the first surface 31 and faces the mounting surface 2a.

As shown in FIG. 5, fixing means 35 is attached to the first surface 31 of the base 25. The fixing means 35 is a double-sided tape, for example. The base 25 is fixed to the lower surface 21 of the covering member 11 by the fixing means 35 so that the base 25 is covered with the covering member 11.

The second rubber legs 33 are fixed to the second surface 32 of the base 25, for example, by a double-sided tape. As shown in FIG. 3, the second rubber legs 33 are in contact with the mounting surface 2a on which the base 25 is placed. The second rubber legs 33 support the base 25.

As shown in FIG. 7, the base 25 is provided with an opening 37, a first stopper 38 and a pair of third stoppers 39. The opening 37 is defined by the first surface 31 and the second surface 32. The first stopper 38 is an example of a first stopper and a first contact portion.

The first stopper 38 is arranged on an inner edge 37a of the base 25 which defines the opening 37. The first stopper 38 extends from the inner edge 37a radially outward. The first stopper 38 has a width which allows the display 3 to rotate within a predetermined angle. For example, in the case where the display 3 is rotatable up to 30°, the first stopper 38 has a width that subtends an angle of 30° relative to the central axis.

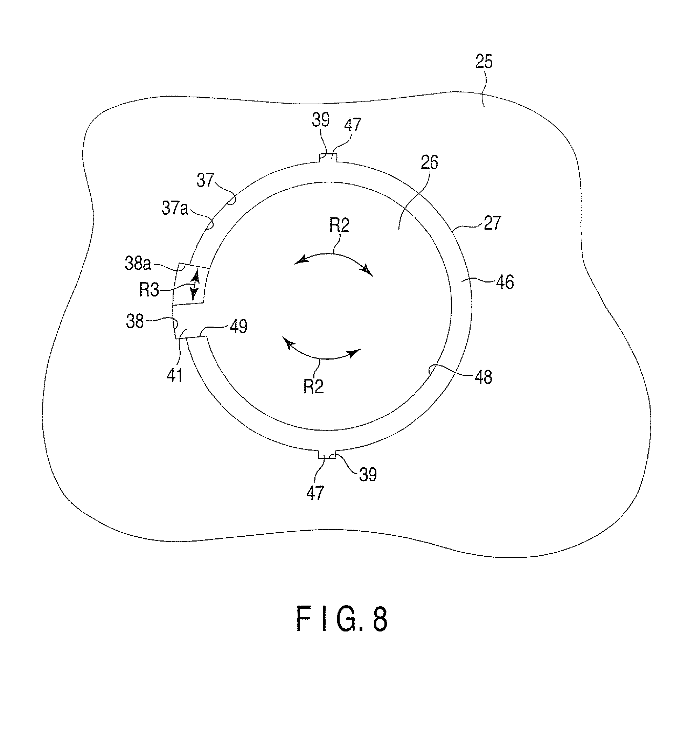

FIG. 8 is a schematic view of the column 26 and the opening 37. As shown in FIG. 8, the third stoppers 39 are arranged on an inner edge 37a. The third stoppers 39 extend from the inner edge 37a of the opening 37 radially outward. The pair of third stoppers 39 oppose each other.

As shown in FIG. 3, the column 26 supports the display 3. As shown in FIG. 6, the column 26 is inserted into the insertion hole 23 of the covering member 11. The column 26 is fitted into the opening 37.

The column 26 rotates in the circumferential direction of the opening 37 indicated by an arrow R2 shown in FIG. 8 relative to the base 25 within the opening 37. The circumferential direction R2 and the direction R1 in which the display 3 rotates as shown in FIG. 1 are concentric. The display 3 rotates in the direction R1 as the column 26 rotates in the direction R2.

As shown in FIG. 7, the column 26 comprises a second stopper 41 and a supporting portion 42. The second stopper 41 is an example of a second stopper and a second contacting portion. The second stopper 41 projects from the column 26. The second stopper 41 is integrally formed with the column 26. The second stopper 41 engages with the first stopper 38 as the column 26 is fitted into the opening 37.

As shown in FIG. 8, the second stopper 41 rotates in the direction R3 within the first stopper 38 when the column 26 rotates in the direction R2 relative to the base 25. As the column 26 rotates relative to the base 25, the second stopper 41 is brought into contact with the connecting edge 38a which is a side edge of the first stopper 38. In other words, if the display 3 rotates up to the maximum angle, the second stopper 41 is stopped by the connecting edge 38a, and the rotation of the column 26 is limited.

As shown in FIG. 6, the supporting portion 42 is integrally formed with the column 26. The diameter of the supporting portion 42 is greater than that of the column 26. The supporting portion 42 is supported by the first surface 31 of the base 25, with the first lubricative member 27 interposed.

As shown in FIG. 7, the first lubricative member 27 comprises a mounting portion 45, a guide portion 46 and a pair of fourth stoppers 47. The first lubricative member 27 is also provided with a guide hole 48 and a first depression 49.

The first lubricative member 27 is formed, for example, of polyacetal resin (POM) which is known as engineering plastic having excellent sliding properties such as wear resistance. The first lubricative member 27 may be formed of other materials having excellent sliding properties.

The mounting portion 45 has an annular shape, and is placed on the first surface 31 of the base 25. As shown in FIG. 6, the mounting portion 45 is arranged between the supporting portion 42 and the first surface 31 of the base 25. The guide portion 46 has a cylindrical shape. The guide portion 46 is fitted into the opening 37 of the base 25. The guide portion 46 is fitted between the inner edge 37a and the column 26. The guide portion 46 is fitted into the opening 37 so that the end of the guide portion 46 is projected beyond the second surface 32 of the base 25.

The guide hole 48 is formed inward of the mounting portion 45 and the guide portion 46. The column 26 is inserted into the guide hole 48. Since the first lubricative member 27 is formed of POM, the column 26 smoothly rotates inside the guide hole 48.

As shown in FIG. 7, the first depression 49 extends from an inner edge 48a of the mounting portion 45, which defines the guide hole 48, radially outward. The first depression 49 has a width greater than that of the first stopper 38. That is, the first depression 49 is wider than the range of movement of the second stopper 41 within the first stopper 38.

The pair of fourth stoppers 47 extend from the circumference of the guide portion 46 and are arranged corresponding to the pair of third stoppers 39. The fourth stoppers 47 extend in the direction which the guide portion 46 extends. The pair of fourth stoppers 47 oppose each other.

As shown in FIG. 8, the guide portion 46 is fitted into the opening 37 so that the fourth stoppers 47 engage with the third stoppers 39. In this structure, the fourth stoppers 47 limit the movement of the first lubricative member 27 in the direction R2. That is, the rotation of the first lubricative member 27 in the direction R2 is limited by engagement of the fourth stoppers 47 with the third stoppers 39.

As shown in FIG. 7, the second lubricative member 28 is provided with a fitting hole 51, a pair of fifth stoppers 52 and a second depression 53. The second lubricative member 28 is formed, for example, of POM, but may be formed of other materials having excellent sliding properties.

The second lubricative member 28 has an annular shape. The second lubricative member 28 is put onto the second surface 32 of the base 25 in the state where the first lubricative member 27 is attached to the base 25.

As shown in FIG. 6, the guide portion 46 of the first lubricative member 27 is fitted into the fitting hole 51. The second lubricative member 28 is put onto the base 25 so that the end of the guide portion 46 which is projected beyond the second surface 32 is fitted into the fitting hole 51.

As shown in FIG. 7, the second depression 53 extends from an inner edge 51a of the second lubricative member 28, which defines the fitting hole 51, radially outward. The second depression 53 has a width greater than that of the first stopper 38. That is, the second depression 53 is wider than the range of movement of the second stopper 41 within the first stopper 38.

The pair of fifth stoppers 52 are arranged corresponding to the pair of fourth stoppers 47. The fifth stoppers 52 are arranged on the inner edge 51a of the second lubricative member 28. The fifth stoppers 52 extend from the inner edge 51a radially outward from the fitting hole 51. The pair of fifth stoppers 52 oppose each other.

The guide portion 46 is fitted into the fitting hole 51 of the second lubricative member 28 so that the fourth stoppers 47 engage with the fifth stoppers 52. With this structure, the fifth stoppers 52 limit the movement of the second lubricative member 28 in the direction R2. That is, the rotation of the second lubricative member 28 in the direction R2 is limited by engagement of the fourth stoppers 47 with the fifth stoppers 52.

As shown in FIG. 6, the cover 29 has a sliding surface 56 and a bottom surface 57. The bottom surface 57 is opposed to the sliding surface 56. The sliding surface 56 is brought into contact with the end portion 26a of the column 26 and the second lubricative member 28 from the bottom so that the cover 29 is fixed to the column 26 by a plurality of screws 58.

The base 25 is sandwiched between the cover 29 and the supporting portion 42 of the column 26. In addition, the second lubricative member 28 is sandwiched between the cover 29 and the base 25. The base 25 is sandwiched between the supporting portion 42 and the cover 29 so as to attach the column 26 to the base 25.

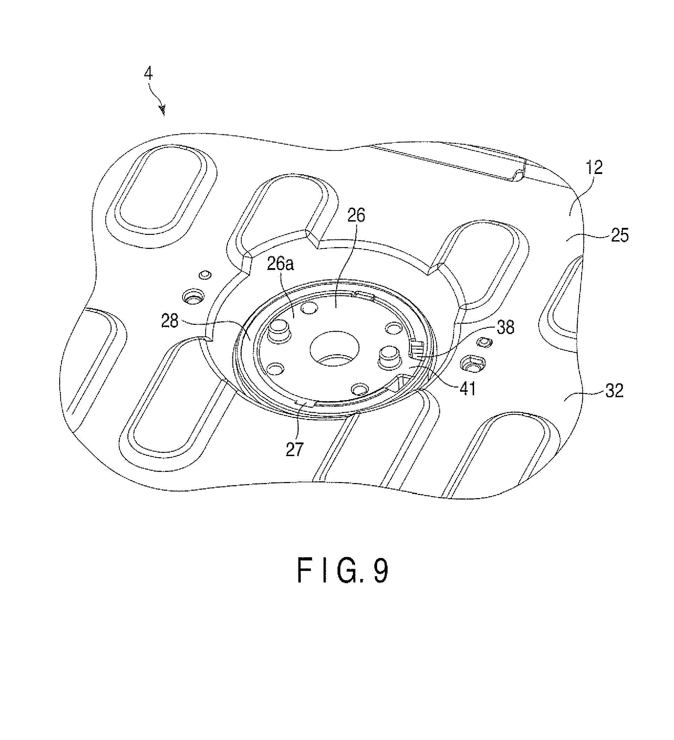

FIG. 9 is a perspective view of a part of the stand 4 except the cover 29 when viewed from below. As shown in FIG. 9, if the cover 29 is removed from the stand 4, the first stopper 38 and the second stopper 41 are externally exposed. As shown in FIG. 4, when the cover 29 is attached to the column 26, the cover 29 covers the first stopper 38 and the second stopper 41 from the bottom.

As shown in FIG. 6, the column cover 16 covers the column 26 projecting beyond the upper surface 22 of the cover member 11 and the insertion hole 23. The column cover 16 is provided with a cover opening 16a from which the column 26 is exposed. The column cover 16 is fixed to the base 25 of the supporting member 12, for example, by a screw. In this structure, the cover member 11 is sandwiched between the column cover 16 and the base 25.

When the column 26 rotates in the circumferential direction of the opening 37, the supporting portion 42 of the column 26 is rubbed against the first lubricative member 27. Since the cover 29 is fixed to the column 26, the cover 29 rotates together with the column 26. The cover 29 is rubbed against the second lubricative member 28 when rotating.

As shown in FIG. 8, when the column 26 rotates, the second stopper moves in the direction R3 within the first stopper 38. If the column 26 rotates up to the maximum angle, the second stopper 41 is stopped by the connecting edge 38a of the first stopper 38.

According to the liquid crystal television 1 having the above structure, the cover 29 covers the first stopper 38 and the second stopper 41. In this structure, an object is prevented from being inserted between the first stopper 38 and the second stopper 41, which secures a high level of safety. In addition, this structure prevents dust from entering between the first stopper 38 and the second stopper 41. This prevents degrading the rotation properties of the column 26 due to dust.

The base 25 is sandwiched between the cover 29 and the supporting portion 42 of the column 26, and the first stopper 38 and the second stopper 41 are covered with the cover 29. Since the member for attaching the column 26 to the base 25 and the member for covering the first stopper 38 and the second stopper 41 are integrally formed, the number of components can be decreased.

The supporting portion 42 of the column 26 is supported by the base 25. The column 26 supports the display 3. The second rubber legs 33 of the base 25 are brought into contact with the mounting surface 2a. The display 3 is supported by the base 25 by means of the column 26. The base 25 and the column 26 support the display 3 separately from the covering member 11 which is a glass plate. With this structure, even if the cover member 11 is broken, the base 25 supports the display 3 to prevent the liquid crystal television 1 from toppling over.

Since the base 25 is covered with the covering member 11 which is a glass plate, the appearance of the liquid crystal television 1 can be improved. In addition, the covering member 11 is fixed onto the first surface 31 of the base 25 and is supported by the four first rubber legs 15. This structure improves the stability of the base 25 and improves the level of safety of the liquid crystal television 1.

The first lubricative member 27 is placed between the supporting portion 42 of the column 26 and the base 25, and the second lubricative member 28 is placed between the base 25 and the cover 29. This allows the column 26 to smoothly rotate in the circumferential direction R2 of the opening 37. Further, the first lubricative member 27 and the second lubricative member 28 are formed of POM which is excellent in wear resistance. These lubricative members decrease dust generated when the column 26 rotates, and the components are rubbing against each other.

The rotation of the first lubricative member 27 in the circumferential direction of the opening 37 is limited by the third stoppers 39 and the fourth stoppers 47. This prevents rotation of the first lubricative member 27 by friction when the column 26 rotates.

By preventing the rotation of the first lubricative member 27 in accordance with rotation of the column 26, rubbing not expected in the design stage can be prevented. For example, the supporting portion 42 of the column 26 and the surface of the first lubricative member 27 facing the supporting portion 42 rub against each other, while the base 25 and the surface of the first lubricative member 27 facing the base 25 do not rub against each other. This structure prevents dust from generating by rubbing in unexpected portions.

The rotation of the second lubricative member 28 in the circumferential direction of the opening 37 is limited by the fourth stoppers 47 and the fifth stoppers 52. This prevents rotation of the second lubricative member 28 by friction when the column 26 rotates.

By preventing the rotation of the second lubricative member 28 in accordance with rotation of the column 26, rubbing not expected in the design stage can be prevented. For example, the cover 29 and the surface of the second lubricative member 28 facing the cover 29 rub against each other, while the base 25 and the surface of the second lubricative member 28 facing the base 25 do not rub against each other. This structure prevents dust from generating by rubbing in unexpected portions.

The present invention is not limited to the above mentioned embodiment, but may be modified without departing from the spirit or scope of the general inventive concept. For example, the present invention is not limited to be applied to the liquid crystal television, but may be applicable to a display of a personal computer.

Further, in the above embodiment, the first stopper 38 is a depression, and the second stopper 41 is a projection. However, the shapes of them are not limited as described in the embodiment. For example, the first stopper may be a projection projecting from the inner edge 37a of the opening 37, and the second stopper may be a depression provided on the column 26.

## Claims

1. A television (1) **characterized by** comprising:
a base (25) provided with a first surface (31), a second surface (32) opposed to the first surface (31), an opening (37) defined by the first surface (31) and the second surface (32), and a first stopper (38) on an inner edge (37a) defining the opening (37);
a column (26) configured to support a display (3) showing an image, the column (26) being fitted into the opening (37) and being configured to rotate in a circumferential direction of the opening (37) relative to the base (25);
a second stopper (41) provided on the column (26) and brought into contact with the first stopper (38) when the column (26) rotates relative to the base (25);
a supporting portion (42) provided on the column (26) and supported on the first surface (31) of the base (25); and
a cover (29) fixed to the column (26), the cover (29) being configured to sandwich the base (25) with the supporting portion (42) and cover the first stopper (38) and the second stopper (41) from the side of the second surface (32) of the base(25).

2. The television (1) of Claim 1, **characterized in that** the base (25) is brought into contact with a mounting surface (2a) on which the base (25) is placed in order to support the column (26).

3. The television (1) of Claim 2, **characterized by** further comprising a covering member (11) provided with an insertion hole (23) into which the column (26) is inserted and configured to cover the base (25).

4. The television (1) of Claim 1, **characterized by** further comprising a first lubricative member (27) sandwiched between the supporting portion (42) and the first surface (31) of the base (25).

5. The television (1) of Claim 4, **characterized by** further comprising a second lubricative member (28) sandwiched between the cover (29) and the second surface (32) of the base (25).

6. The television (1) of Claim 5, **characterized in that**
the base (25) is provided with a third stopper (39) on the inner edge (37a),
the first lubricative member (27) is provided with a fourth stopper (47), and
the fourth stopper (47) is fitted into the third stopper (39) in order to limit movement of the first lubricative member (27) in the circumferential direction of the opening (37).

7. The television (1) of Claim 6, **characterized in that**
the second lubricative member (28) is provided with a fifth stopper (52), and
the fifth stopper (52) is fitted into the fourth stopper (47) in order to limit movement of the second lubricative member (28) in the circumferential direction of the opening (37)

8. The television (1) of Claim 1, **characterized in that**
the first stopper (38) is a depression extending from the inner edge (37a) radially outward of the opening (37),
the second stopper (41) is a projection projecting from the column (26) and is configured to move within the first stopper (38) when the column (26) rotates relative to the base (25).

9. A stand (4) **characterized by** comprising:
a base (25) provided with a first surface (31), a second surface (32) opposed to the first surface (31), an opening (37) defined by the first surface (31) and the second surface (32), and a first stopper (38) on an inner edge (37a) defining the opening (37);
a column (26) configured to support a display (3) showing an image, the column (26) being fitted into the opening (37) and being configured to rotate in a circumferential direction of the opening (37) relative to the base (25);
a second stopper (41) provided on the column (26) and brought into contact with the first stopper (38) when the column (26) rotates relative to the base (25);
a supporting portion (42) provided on the column (26) and supported on the first surface (31) of the base (25); and
a cover (29) fixed to the column (26), the cover (29) being configured to sandwich the base (25) with the supporting portion (42) and cover the first stopper (38) and the second stopper (41) from the side of the second surface (32) of the base (25).

10. An electronic apparatus (1) **characterized by** comprising:
a first member (25) provided with an opening (37) and a first contact portion (38) on an inner edge (37a) defining the opening (37);
a second member (26) fitted into the opening (37) and rotating in a circumferential direction of the opening (37) relative to the first member (25);
a second contact portion (41) provided to the second member (26) and brought into contact with the first contact portion (38) when the second member (26) rotates relative to the first member (25); and
a cover (29) fixed to the second member (26) and configured to cover the first contact portion (38) and the second contact portion (41).
